# EUROPÄISCHE PATENTSCHRIFT

(11) **EP 3 078 310 B1**
(45) Veröffentlichungstag und Bekanntmachung des Hinweises auf die Patenterteilung: **06.06.2018**
(21) Anmeldenummer: 16020093.7
(22) Anmeldetag: 22.03.2016
(51) Int. Cl.: A47J 31/60

(54) **ENTKALKUNGSVORRICHTUNG FÜR EINEN GETRÄNKEBEREITER**
DESCALING DEVICE FOR A BEVERAGE PREPARATION MACHINE
DISPOSITIF DE DÉTARTRAGE POUR UN DISPOSITIF DE PRÉPARATION DE BOISSONS

(30) Priorität: 10.04.2015 DE 102015105461
(43) Veröffentlichungstag der Anmeldung: 12.10.2016
(73) Patentinhaber: Miele & Cie. KG, 33332 Gütersloh (DE)
(72) Erfinder: Tembaak, Jutta, 49492 Westerkappeln (DE); Last, Mario, 33739 Bielefeld (DE); Klapper, Diana, 33729 Bielefeld (DE)

(56) Entgegenhaltungen:
- EP-A2- 2 671 480
- CN-A- 104 342 300
- DE-A1-102012 104 843
- DE-A1-102013 106 148

## Beschreibung

Die Erfindung betrifft eine Entkalkungsvorrichtung zur Entkalkung eines Strömungsleitungssystems für Fluide, umfassend einen über einen Wassereinlass mit Wasser beaufschlagbaren Vorratsbehälter mit einem darin enthaltenen wasserlöslichen Entkalkungsmittel, dessen Lösung über einen Gemischauslass des Vorratsbehälters abführbar ist, wobei in dem mit Wasser aufgefüllten Vorratsbehälter eine sich ausbildende gesättigte Lösung des ursprünglich festen, pulverförmigen oder pastösen Entkalkungsmittels gegeben ist, wobei im Entkalkungsmittel ferner ein Konservierungsmittel eingebracht ist, welches sich bei Zugabe des Wassers gemeinsam mit dem Entkalkungsmittel auflöst und die Wirklösung bereitstellt.

Aus der EP 2 671 480 A1 ist eine Entkalkungsvorrichtung zur Entkalkung eines Strömungsleitungssystems für Fluide, umfassend einen über einen Wassereinlass mit Wasser beaufschlagbaren Vorratsbehälter mit einem darin enthaltenen wasserlöslichen Entkalkungsmittel bekannt. Die Lösung wird hierbei über einen Gemischauslass des Vorratsbehälters abgeführt, wobei in dem mit Wasser aufgefüllten Vorratsbehälter eine sich ausbildende gesättigte Lösung des ursprünglich pulverförmigen oder pastösen Entkalkungsmittels gegeben ist.

Gelöstes Entkalkungsmittel hat jedoch in der Regel eine kurze Haltbarkeit, da aufgrund der natürlichen bzw. lebensmittelechten Grundstoffe eine Verkeimung nach einer längeren Verweildauer im Wasser auftreten kann. Bei manueller Entkalkung tritt das Problem nicht auf, da das Entkalkungsmittel in der Menge eines einzigen Entkalkungsvorganges in fester Form dem Vorratsbehälter zugegeben wird, wo es sich auflöst. Das nun flüssige Entkalkungsmittel wird während des einen Entkalkungsvorganges vollständig aufgebraucht, sodass kein gelöstes Entkalkungsmittel im Leitungssystem oder Vorratsbehälter verbleibt.

Die DE 10 2012 104 843 A1 offenbart einen Getränkebereiter mit einem Strömungsleitungssystem, das eine Entkalkungsvorrichtung zur automatischen Zugabe eines bevorrateten Entkalkungsmittels umfasst. Dem Entkalkungsmittel ist ein Keim reduzierendes Mittel, wie eine anorganische Säure, zugesetzt, um die Haltbarkeit zu verbessern.

Bei einem Kartuschensystem wird Entkalkungsmittel für mehrere Entkalkungsvorgänge in gelöster, also flüssiger Form, in einem Mischbehälter oder Vorratsbehälter vorgehalten, damit bedarfsweise der Entkalkungsvorgang automatisch, also ohne weitere Benutzerhandlungen von der Gerätesteuerung aktiviert und durchgeführt werden können. Das Entkalkungsmittel, das üblicherweise aus einem Säureanteil besteht, wird dabei über einen längeren Zeitraum in aufgelöster Form in der Kartusche oder Mischkammer vorgehalten. Als Säure wird dabei üblicherweise Apfelsäure oder Zitronensäure verwendet, da sie für lebensmittelführende Komponenten besonders gut geeignet und dazu recht preiswert zu beschaffen ist. Beim Verweilen der aufgelösten Säure über mehrere Tage oder Wochen und zusätzlichen äußeren Randbedingungen, wie beispielsweise Wärme, besteht die Gefahr, dass sich Schimmelpilze oder sonstige Verkeimungen in der aufgelösten Säure, der sogenannten Wirklösung, bilden. Der Erfindung liegt somit die Aufgabe zu Grunde, die Entkalkungsvorrichtung bzw. das Strömungsleitungssystem hinsichtlich hygienischer Anforderungen zu verbessern. Erfindungsgemäß wird unter anderem diese Aufgabe durch eine Entkalkungsvorrichtung mit den Merkmalen des unabhängigen Anspruchs 1 und durch einen Getränkebereiter gemäß Anspruch 6 gelöst. Vorteilhafte Ausgestaltungen und Weiterbildungen der Erfindung ergeben sich aus den jeweils nachfolgenden abhängigen Ansprüchen.

Die mit der Erfindung erreichbaren Vorteile bestehen darin, dass auf einfache Weise eine recht lange Lebensdauer der Kartusche bereitgestellt werden kann. Dadurch wird dem Benutzer eines verkalkungsgefährdeten Gerätes mit einer automatisch arbeitenden Entkalkungsvorrichtung ein geringer Wartungsaufwand aufgebürdet, da aufgrund der langen Kartuschenlebensdauer der Kartuschenwechsel oder ein Nachfüllen des Entkalkungsmittel selten bzw. in sehr großen zeitlichen Abständen durchgeführt werden muss.

Diese Möglichkeit bzw. die oben genannte positive Wirkung wird dadurch erreicht, dass im Entkalkungsmittel neben der kalklösenden Säure, die bei lebensmittelfzubereitenden Geräten aus natürlichen Grundsubstanzen gewonnen wird, ferner ein Konservierungsmittel eingebracht ist, welches sich bei Zugabe des Wassers gemeinsam mit dem Entkalkungsmittel auflöst und die Wirklösung bereitstellt. Das Konservierungsmittel ist dabei ein Mittel aus einer sogenannten unkritischen Substanz, sodass kritisch eingestufte Substanzen nicht mit den mit Lebensmitteln in Berührung kommenden Leitungen oder Komponenten in Berührung kommen. Erfindungsgemäss umfasst das Konservierungsmittel Perillasäure oder Derivate von Perillasäure oder besteht aus Perillasäure oder aus Derivaten von Perillasäure. Diese Substanz oder Substanzen sind im Zusammenhang mit der Lebensmittelverarbeitung als unkritisch angesehen und kostengünstig zu beschaffen.

In einer zweckmäßigen Weiterbildung ist die Perillasäure als Pulver oder Granulat in der Trockensubstanz des Entkalkungsmittels, beispielsweise Apfelsäure oder Zitronensäure, im Wesentlichen gleichmäßig verteilt, eingebracht. Somit wird beim Auflösen des Pulvers oder festen Entkalkungsmittels selbständig und nahezu gleichmäßig bis gleichmäßig das Konservierungsmittel mit in die Wirklösung zugegeben.

In einer anderen, vorteilhaften Ausführung ist die Perillasäure als Pulver oder Granulat in der Trockensubstanz des Entkalkungsmittels, beispielsweise Apfelsäure oder Zitronensäure, ungleichmäßig verteilt eingebracht, derart, zu Beginn der Auflösung sich eine höhere Konzentration der Perillasäure in der resultierenden Wirklösung einstellt. Damit wird eine sogenannte Stossdosierung erreicht, wobei nach jedem Kartuschenwechsel eine erhöhte Konzentration an Perillasäure der Wirklösung und dem Leitungssystem zugeführt wird. Zweckmäßig ist hierbei eine zweifache Konzentration gegenüber der mittleren Konzentration. Damit wird eine zusätzliche bzw. erhöhte Sicherheit hinsichtlich der Entkeimung erreicht. Falls es doch zu einem beginnenden Wachstum von Keimen im Leitungssystem gekommen ist, wird dieses nach jedem Kartuschenwechsel beendet.

Insgesamt ist es zweckmäßig, dass der Anteil des Konservierungsmittels einen Wert in einem Bereich von 0,001% bis 0,1 %, bezogen auf die resultierende Wirklösung aufweist. Damit wird einerseits erreicht, dass Keime erst gar nicht entstehen und andererseits die zur Kalkablösung wirkende Säure nicht zu sehr verdünnt oder neutralisiert wird.

In einer vorteilhaften Weiterbildung weist der Anteil des Konservierungsmittels einen Wert in einem Bereich von 0,005 bis 0,05 %, bezogen auf die resultierende Wirklösung auf. In der Ausführung mit Stossentkalkung ist die Konzentration in dem Bereich, der zu Beginn aufgelöst wird, höher, vorzugsweise doppelt so hoch, wie die Konzentration in dem restlichen Bereich der Vorratskartusche.

Die Erfindung betrifft auch einen Getränkebereiter, wie Kaffeevollautomat oder Teevollautomat, umfassend ein Gehäuse und zumindest ein Strömungsleitungssystem, welches mindestens einen Wasser enthaltenden oder befüllbaren Wasserbehälter oder einen Wasseranschluss, wenigstens eine Pumpe zum Fördern des Wassers durch Leitungsabschnitte und Komponenten des Strömungsleitungssystems, mindestens eine Heizeinrichtung zum Erhitzen des Wassers, mindestens eine Ventilanordnung und wenigstens eine Entnahmeeinrichtung umfasst, und einer Steuereinrichtung zur Steuerung einer im Strömungsleitungssystem eingebundenen Pumpe, einer Heizeinrichtung und Ventilen zur Zubereitung eines ausgewählten Getränkes, wobei die Steuereinrichtung ferner dazu eingerichtet ist, die Pumpe während einer Phase zum Entkalken des Strömungsleitungssystems zu betreiben, umfassend eine Entkalkungsvorrichtung wie vorstehend genannt zur Entkalkung des Strömungsleitungssystems.

Ein Ausführungsbeispiel der Erfindung ist in den Zeichnungen rein schematisch dargestellt und wird nachfolgend näher beschrieben. Es zeigen
- Fig. 1:: einen Getränkebereiter bzw. Kaffeevollautomaten;
- Fig. 2:: eine bevorzugte Ausführung des Strömungsleitungssystems in einer schematischen Ansicht und
- Fig. 3:: in einem Diagramm das Verhalten der Konzentration des Konservierungsmittels über die Zeit.

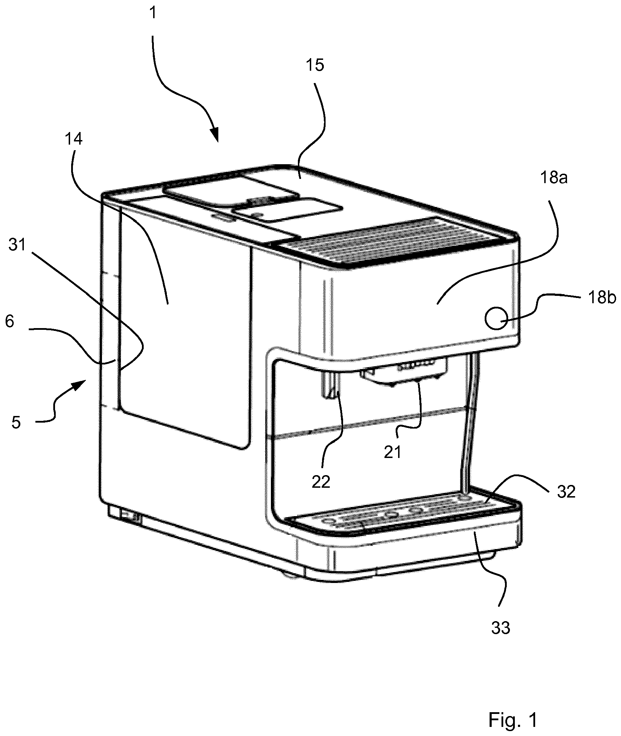

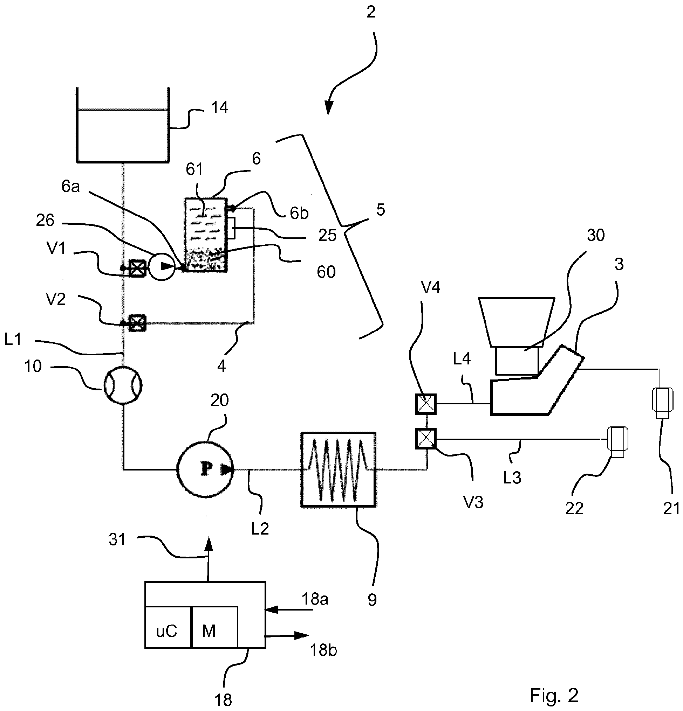

Die Fig.1 zeigt am Beispiel eines als Standgerät ausgebildeten Getränkeautomaten 1 die Möglichkeit, der Unterbringung des Strömungsleitungssystems 2 und Vorratsbehälter 6 zur Bevorratung eines Reinigungsmittels in einem derartigen Getränkeautomaten 1. In der gezeigten Ausführung ist seitlich im Gehäuse 15 des Getränkeautomaten 1 ein Seitenfach 31 vorhanden, dass dem Einsetzen beziehungsweise dem Auswechseln des Vorratsbehälters 6 dient, der im Geräteinneren, hinter diesem Seitenfach 30 angeordnet ist. Im Frontbereich des Getränkeautomaten 1 verfügt dieser über einen Vorbau 31, in dem sichtgeschützt mehrere Entnahmeeinrichtungen 21, 22 untergebracht sind. Bei der Entnahmeeinrichtung 22 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse zur Abgabe von Kaffeegetränken dar. Eine Brüheinheit mit einer Brühkammer 3 im Inneren des Gerätes 1 dient zur Zubereitung des Getränkes, wobei in die Brühkammer 3 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einen hierfür unterhalb des Abtropfbleches 32 vorhandenen Auffangbehälter abzuführen. Das Gerät 1 umfasst gem. Fig. 1 und 2 ferner eine Steuereinrichtung 18, die dazu eingerichtet ist, die einzelnen Funktionsbaugruppen, wie Pumpen 20, Ventile und Heizeinrichtung 9 und Mahlwerk 30, soweit vorhanden, zu steuern, wie es für die Zubereitung des jeweils ausgewählten Getränkes notwendig ist. Die Steuereinrichtung 18 ist in dieser Ausführung ferner dazu eingerichtet, die Ventile V1, V2 des Strömungsleitungssystems 2 so anzusteuern, dass eine vollautomatische Entkalkung des Strömungsleitungssystems 2, insbesondere der mit Kalk oder anderen Ablagerungen beaufschlagten Leitungsabschnitte bzw. Komponenten, wie beispielsweise Flowmeter, Pumpe oder Ventile V3, V4, stattfindet.

Fig. 2 zeigt einen vereinfachten Schaltplan eines Strömungsleitungssystems 2 innerhalb eines Getränkeautomaten 1. Von einer Wasserquelle 14, in diesem Beispiel ein Wassertank, wird das Strömungsleitungssystem 2 mit frischem Wasser versorgt. Das Strömungsleitungssystem 2 umfasst zwei Teile, wobei ein erster Teil der Zubereitung von Getränken dient und der andere Teil als Bypass 4 von diesem ersten Teil des Strömungsleitungssystems 2 abgezweigt ist. Der Bypass 4 enthält den Vorratsbehälter 6 mit dem darin enthaltenen Entkalkungsmittel 60 oder Säure, welche geeignet ist zum Einsatz in dem Strömungsleitungssystem 2, welches flüssig, pulverförmig, granulatförmig oder als wasserlöslicher Block ausgebildet ist. Als wasserlöslicher Block kommen Ausführungen als Pille/Kugel, gegebenenfalls mit einem Überzug gegen Verkleben bei Dampfeinwirkung in Frage und welche mittels der Ventile V1 und V2 aktiviert werden können, so dass dieser Leitungsabschnitt 4 eine Entkalkungsvorrichtung 5 bildet, die bei Bedarf an den wasserführenden Teil des Strömungsleitungssystems 2 angeschlossen werden kann. Zur Verbindung des Bypasses 4 mit oder zur Trennung des Bypasses 4 von dem ersten Teil des Strömungsleitungssystems 2 dient auf der Eingangsseite des Bypasses 4 das Mehrwegventil V1, und auf der Ausgangsseite, zum Leitungsabschnitt L1 das Mehrwegventil V2. Zur Erzeugung der Strömung innerhalb des Strömungsleitungssystems 2 sowie des erforderlichen Druckaufbaus dient eine Pumpe 20. Darüber hinaus weist der zur Zubereitung der Getränke genutzte Teil des Strömungsleitungssystems 2 eine Heizeinrichtung 9 zur Erwärmung des Wassers 2a sowie mehrere Entnahmeeinrichtungen 21, 22, sowie Leitungsabschnitte L1, L2, L3, L3 zur Verbindung der einzelnen Komponenten miteinander auf, wobei die Dampfdüse 22 zur Ausgabe von Dampf und zur Ausgabe von heißem Wasser und/oder die Kaffeedüse 21 zur Ausgabe des zubereiteten Kaffeegetränkes oder Teegetränkes, je nachdem, welches Pulver oder Substrat der Brühkammer zugeführt wurde, vorgesehen ist. Zur selektiven Ansteuerung der Entnahmeeinrichtungen 21, 22 dienen die Mehrwegeventile V3 und V4, die den Entnahmeeinrichtungen 21, bzw. der Brühkammer 3 in Strömungsrichtung betrachtet vorgeschaltet sind. Darüber hinaus kann das Strömungsleitungssystem 2 ein Messgerät zur Volumenstrommessung, das als Flowmeter 10 bezeichnet wird, aufweisen, das hilfreich ist, um eine genaue Menge frischen Wassers zu bestimmen, die für die Zubereitung eines Getränkes erforderlich ist. Darüber hinaus lässt sich mit einer derartigen Messeinrichtung 10 auch die Anzahl der hergestellten Getränke bestimmen.

Eine Steuereinrichtung 18 mit einem Mikrocontroller uC und einer Speichereinrichtung M dient zur Durchführung einer Getränkezubereitung, wobei hierbei die Aktivierung der Heizeinrichtung, der Ventile V1, V2, V3 und V4 sowie der Pumpe 20, der Brühkammer 3 und bedarfsweise weiteren Komponenten, wie einem Mahlwerk 30 durch entsprechende Signalverbindungen 31 erfolgt. In Fig. 2 ist die Signalverbindung 31 zum Motor der Pumpe 20 skizziert, wobei die Ansteuerung der Pumpe 20 in einer bevorzugten derart erfolgt, dass verschiedene Förderleistungen eingestellt werden können.

Gemäß einer weiteren Ausführung ist in der Bypassleitung 4 eine weitere Pumpe 26 eingesetzt, die zur Förderung von Frischwasser durch den Vorratsbehälter 6 oder Kartusche dient, um Entkalkungsmittel aus dem Behälter in die freigeschalteten Leitungsabschnitte des Strömungsleitungssystems 2 vorgesehen ist. Diese Pumpe 26 wird dabei von der Steuereinrichtung 18 ebenfalls so gesteuert, dass sich vorbestimmte Förderleistungen einstellen, um eine vorbestimmte Säurekonzentration bzw. Entkalkungsmittelkonzentration im Strömungsleitungssystem 2 bzw. in den einzelnen Leitungsabschnitten L1, L2, L3, L4 und den daran angeschlossenen Komponenten 10, 20, 9, V2, V3, 22, oder 10, 20, 9, V2, V4, L4, 3, 21 zu erreichen.

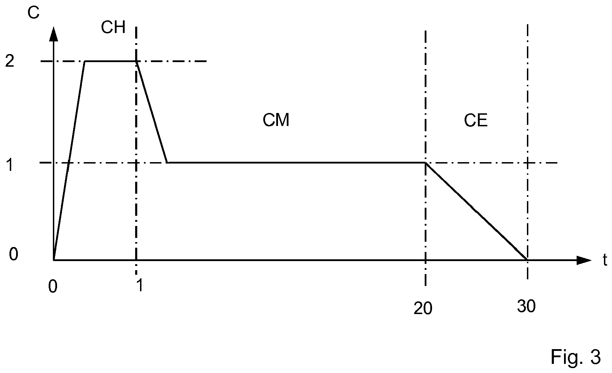

Fig. 3 zeigt in einem Diagramm schematisch, wie sich die Konzentration C des Konservierungsmittels bezüglich der Betriebsdauer t der Kartusche 6 verhält. Zum Zeitpunkt t=0 wird die neu eingesetzte Kartusche 6 das erst mal geflutet. Es entsteht eine gesättigte Wirklösung, die die Konzentration CH an Konservierungsmittel enthält. Für den ersten Entkalkungsvorgang wird dann diese Wirklösung durch das zu entkalkende Strömungsleitungssystem 2 (Fig. 2) gepumpt. Zum Zeitpunkt t=1, beispielsweise nach einer Woche, wird ein neuer Entkalkungszyklus aktiviert. Die Konzentration C der Wirklösung vermindert sich ab diesem Zeitpunkt bis zum mittleren Wert CM, der dann für die weiteren Entkalkungszyklen eingestellt ist. Nach beispielsweise 20 Entkalkungszyklen ist zum Zeitpunkt t=20 die feste Substanz 60 vollständig gelöst, sodass sich ab t=20 die Wirklösung mit jedem nachfolgenden Entkalkungszyklus verdünnt. Zum Zeitpunkt t=30, beispielsweise nach insgesamt 30 Entkalkungszyklen ist die Wirklösung vollständig aufgebraucht und die Kartusche 6 muss gewechselt werden.

## Patentansprüche

1. Entkalkungsvorrichtung (5) zur Entkalkung eines Strömungsleitungssystems für Fluide, umfassend einen über einen Wassereinlass mit Wasser beaufschlagbaren Vorratsbehälter (6) mit einem darin enthaltenen wasserlöslichen Entkalkungsmittel (60), dessen Lösung über einen Gemischauslass (6b) des Vorratsbehälters (6) abführbar ist, wobei in dem mit Wasser aufgefüllten Vorratsbehälter (6) eine sich ausbildende gesättigte Lösung (61) des ursprünglich festen, pulverförmigen oder pastösen Entkalkungsmittels (60) gegeben ist, wobei im Entkalkungsmittel (60) ferner ein Konservierungsmittel eingebracht ist, welches sich bei Zugabe des Wassers gemeinsam mit dem Entkalkungsmittel (60) auflöst und die Wirklösung (61) bereitstellt,
**dadurch gekennzeichnet,**
**dass** das Konservierungsmittel Perillasäure oder Derivate von Perillasäure umfasst oder aus Perillasäure oder aus Derivaten von Perillasäure besteht.

2. Entkalkungsvorrichtung nach Anspruch 1,
**dadurch gekennzeichnet,**
**dass** die Perillasäure als Pulver oder Granulat in der Trockensubstanz des Entkalkungsmittels, beispielsweise Apfelsäure oder Zitronensäure, im Wesentlichen gleichmäßig verteilt eingebracht ist.

3. Entkalkungsvorrichtung nach Anspruch 1,
**dadurch gekennzeichnet,**
**dass** die Perillasäure als Pulver oder Granulat in der Trockensubstanz des Entkalkungsmittels, beispielsweise Apfelsäure oder Zitronensäure, ungleichmäßig verteilt eingebracht ist, derart, dass zu Beginn der Auflösung sich eine höhere Konzentration der Perillasäure in der resultierenden Wirklösung einstellt.

4. Entkalkungsvorrichtung nach einem der Ansprüche 1 bis 3,
**dadurch gekennzeichnet,**
**dass** der Anteil des Konservierungsmittels einen Wert in einem Bereich von 0,001% bis 0,1 %, bezogen auf die resultierende Wirklösung aufweist.

5. Entkalkungsvorrichtung nach Anspruch 4,
**dadurch gekennzeichnet,**
**dass** der Anteil des Konservierungsmittels einen Wert in einem Bereich von 0,005 bis 0,05 %, bezogen auf die resultierende Wirklösung aufweist.

6. Getränkebereiter (1), wie Kaffeevollautomat oder Teevollautomat, umfassend ein Gehäuse (15) und zumindest ein Strömungsleitungssystem (2), welches mindestens einen Wasser enthaltenden oder befüllbaren Wasserbehälter (14) oder einen Wasseranschluss, wenigstens eine Pumpe (20) zum Fördern des Wassers durch Leitungsabschnitte (L1, L2, L3, L4) und Komponenten des Strömungsleitungssystems (2), mindestens eine Heizeinrichtung (9) zum Erhitzen des Wassers, mindestens eine Ventilanordnung (V3, V4) und wenigstens eine Entnahmeeinrichtung (21, 22) umfasst, und einer Steuereinrichtung (18) zur Steuerung einer im Strömungsleitungssystem (2) eingebundenen Pumpe (20), einer Heizeinrichtung (9) und Ventilen (V3, V4) zur Zubereitung eines ausgewählten Getränkes, wobei die Steuereinrichtung (18) ferner dazu eingerichtet ist, die Pumpe (20) während einer Phase zum Entkalken des Strömungsleitungssystems (2) zu betreiben, **gekennzeichnet durch**
eine Entkalkungsvorrichtung (5) gemäß einem der Ansprüche 1 bis 5 zur Entkalkung des Strömungsleitungssystems (2).

## Claims

1. Descaling device (5) for descaling a flow line system for fluids, comprising a storage container (6) to which water can be admitted by means of a water inlet and which has a watersoluble descaling agent (60) contained therein, the solution of which agent can be discharged through a mixture outlet (6b) of the storage container (6), a developing saturated solution (61) of the originally solid, powdery or pasty descaling agent (60) being introduced into the storage container (6) that is filled with water, a preservative additionally being introduced into the descaling agent (60), which preservative dissolves, together with the descaling agent (60), when the water is added, and provides the active solution (61),
**characterised in that**
the preservative comprises perillic acid or derivatives of perillic acid, or consists of perillic acid or of derivatives of perillic acid.

2. Descaling device according to claim 1,
**characterised in that**
the perillic acid is introduced into the dry matter of the descaling agent, for example malic acid or citric acid, in the form of a powder or granular material and so as to be substantially evenly distributed.

3. Descaling device according to claim 1,
**characterised in that**
the perillic acid is introduced into the dry matter of the descaling agent, for example malic acid or citric acid, in the form of a powder or granular material and so as to be unevenly distributed, such that there is a higher concentration of perillic acid in the resulting active solution at the start of the dissolution.

4. Descaling device according to any of claims 1 to 3,
**characterised in that**
the proportion of preservative is in a range of from 0.001% to 0.1% based on the resulting active solution.

5. Descaling device according to claim 4,
**characterised in that**
the proportion of preservative is in a range of from 0.005 to 0.05% based on the resulting active solution.

6. Beverage preparation machine (1), such as an automatic coffee machine or an automatic tea machine, comprising a housing (15) and at least one flow line system (2) which comprises at least one water tank (14) that contains or can be filled with water, or a water supply, at least one pump (20) for conveying the water through line portions (L1, L2, L3, L4) and components of the flow line system (2), at least one heating device (9) for heating the water, at least one valve arrangement (V3, V4) and at least one removal device (21, 22), and comprising a control device (18) for controlling a pump (20) integrated in the flow line system (2), a heating device (9), and valves (V3, V4) for preparing a selected beverage, the control device (18) further being designed to operate the pump (20) during a phase for descaling the flow line system (2), **characterised by**
a descaling device (5) according to any of claims 1 to 5 for descaling the flow line system (2).

## Revendications

1. Dispositif de détartrage (5) pour le détartrage d'un système de conduites d'écoulement pour des fluides, comprenant un réservoir de stockage (6) pouvant être alimenté en eau par le biais d'une entrée d'eau et avec un agent de détartrage (60) soluble dans l'eau qui y est contenu et dont la solution peut être évacuée par le biais d'une sortie de mélange (6b) du réservoir de stockage (6), dans lequel il y a, dans le réservoir de stockage (6) rempli d'eau, une solution (61) saturée en cours de constitution de l'agent de détartrage (60) initialement solide, pulvérulent ou pâteux, dans lequel un agent de conservation est en outre introduit dans l'agent de détartrage (60) et se dissout, conjointement avec l'agent de détartrage (60), lors de l'apport de l'eau et fournit la solution active (61),
**caractérisé en ce que**
l'agent de conservation comprend de l'acide périllique ou des dérivés d'acide périllique ou se compose d'acide périllique ou des dérivés d'acide périllique.

2. Dispositif de détartrage selon la revendication 1,
**caractérisé en ce que** l'acide périllique est introduit dans la substance sèche de l'agent de détartrage, par exemple de l'acide malique ou de l'acide citrique, sous forme de poudre ou de granulés et de façon essentiellement uniformément répartie.

3. Dispositif de détartrage selon la revendication 1,
**caractérisé en ce que**
l'acide périllique est introduit dans la substance sèche de l'agent de détartrage, par exemple de l'acide malique ou de l'acide citrique, sous forme de poudre ou de granulés et de façon non uniformément répartie, de telle sorte qu'au début de la dissolution il s'installe une concentration plus élevée de l'acide périllique dans la solution active résultante.

4. Dispositif de détartrage selon l'une des revendications 1 à 3,
**caractérisé en ce que**
la proportion de l'agent de conservation présente une valeur dans une plage de 0,001% à 0,1%, rapportée à la solution active résultante.

5. Dispositif de détartrage selon la revendication 4,
**caractérisé en ce que**
la proportion de l'agent de conservation présente une valeur dans une plage de 0,005% à 0,05%, rapportée à la solution active résultante.

6. Préparateur de boissons (1), tel que machine à café automatique ou théière automatique, comprenant un boîtier (15) et au moins un système de conduites d'écoulement (2) qui comprend au moins un réservoir d'eau (14) contenant de l'eau ou pouvant être rempli d'eau, ou un raccord d'eau, au moins une pompe (20) pour transporter l'eau à travers des tronçons de conduite (L1, L2, L3, L4) et des composants du système de conduites d'écoulement (2), au moins un dispositif de chauffage (9) destiné à chauffer l'eau, au moins un ensemble de vannes (V3, V4) et au moins un dispositif de soutirage (21, 22), et un dispositif de commande (18) pour commander une pompe (20) intégrée dans le système de conduites d'écoulement (2), un équipement de chauffage (9) et des vannes (V3, V4) pour la préparation d'une boisson sélectionnée, dans lequel le dispositif de commande (18) est en outre aménagé pour faire fonctionner la pompe (20) pendant une phase de détartrage du système de conduites d'écoulement (2),
**caractérisé par**
un dispositif de détartrage (5) selon l'une des revendications 1 à 5 pour le détartrage du système de conduites d'écoulement (2).
